(19) Europäisches Patentamt
European Patent Office
Office européen des brevets

(11) Veröffentlichungsnummer: **0 049 393**
**B1**

(12) # EUROPÄISCHE PATENTSCHRIFT

(45) Veröffentlichungstag der Patentschrift: **22.08.84**

(51) Int. Cl.³: **C 08 G 73/10,** C 08 G 73/14, C 08 G 69/40, C 08 L 79/08, C 09 D 5/25, C 09 J 3/16

(21) Anmeldenummer: **81107342.8**

(22) Anmeldetag: **17.09.81**

(54) **Hitzehärtbare, Amid- und Imidgruppen enthaltende Poly-Kondensationsprodukte und ihre Verwendung.**

(30) Priorität: **02.10.80 DE 3037269**

(43) Veröffentlichungstag der Anmeldung: **14.04.82 Patentblatt 82/15**

(45) Bekanntmachung des Hinweises auf die Patenterteilung: **22.08.84 Patentblatt 84/34**

(84) Benannte Vertragsstaaten: **AT BE CH DE FR GB IT LI NL SE**

(56) Entgegenhaltungen:
**DE - A - 1 720 813**
**DE - B - 2 366 273**
**DE - B - 2 434 176**

(73) Patentinhaber: **Dr. Beck & Co. AG, Grossmannstrasse 105, D-2000 Hamburg 28 (DE)**

(72) Erfinder: **Reiter, Udo, Dr., Pfalzring 166, D-6704 Mutterstadt (DE)**
Erfinder: **Lehmann, Helmut, Hasenstieg 5, D-2057 Reinbek (DE)**
Erfinder: **Disteldorf, Walter, Dr., Portugieser Weg 17, D-6706 Wachenheim (DE)**
Erfinder: **Schenk, Hans-Uwe, Dr., Erlenweg 6, D-6706 Wachenheim (DE)**

(74) Vertreter: **Rämisch, Friedrich, Dr., BASF Aktiengesellschaft Carl-Bosch-Strasse 38, D-6700 Ludwigshafen (DE)**

EP 0 049 393 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft hitzehärtbare Amid- und Imidgruppen enthaltende Polykondensationsprodukte und ihre Verwendung als Drahtlacke, für Imprägnierungen und Verklebungen.

Es ist bekannt, aus Butantetracarbonsäure (= BTC) und Diaminen in z.B. Triglykol und Ethylenglykol/Wasser, Polyimid-Ausgangsmaterialien herzustellen (vgl. z.B. DE-B-2 434 176). Dabei wird neben der Umsetzung von BTC mit dem Diamin, die Säure teilweise verestert.

Nach dem Auftragen derartiger Polykondensationsprodukte, z.B. in Form von Lösungen oder wässrigen Dispersionen (z.B. nach DE-A-2 651 194) auf das zu beschichtende Substrat, z.B. Kupferdraht, werden beim Einbrennen Triglykol oder andere mit dem Vorkondensat esterartig verknüpfte Glykole eliminiert.

Für das Erreichen einer guten Elastizität des Lackes muss unbedingt ein Teil des Glykols im Polymer verbleiben; andererseits erniedrigen zu grosse Mengen ganz beträchtlich das Wärmeniveau. Man muss also bei der Drahtlackierung einen Kompromiss bezüglich der Einbrenndauer finden.

Da die Verweilzeit des beschichteten Drahtes im Einbrennofen über die Abzugsgeschwindigkeit gesteuert wird, äussert sich dies in einer sehr kleinen Fahrspanne, d.h. man kann nur in einem kleinen Geschwindigkeitsbereich technisch optimale Ergebnisse erreichen. Stellt man Vorkondensat-Harze ganz ohne Triglykol her, und lackiert mit daraus hergestellten Lösungen Kupferdraht, so bekommt man völlig unbrauchbare Beschichtungen.

Ziel der vorliegenden Erfindung ist es, Polykondensationsprodukte aufzuzeigen, mit denen die oben geschilderten Nachteile vermieden werden und sich Beschichtungen erzielen lassen, die sowohl hohen Erweichungspunkt als auch hohe Elastizität aufweisen.

Dies wurde überraschenderweise durch den Einbau von Oxadicarbonsäuren erreicht.

Gegenstand der vorliegenden Erfindung sind hitzehärtbare Amid- und Imidgruppen enthaltende Polykondensationsprodukte, die dadurch gekennzeichnet sind, dass sie durch Umsetzung von

a) 1,2,3,4-Butantetracarbonsäure oder Butantetracarbonsäureanhydrid mit

b) mindestens einem aliphatischen, cycloaliphatischen oder aromatischen Diamin und

c) mindestens einer Oxadicarbonsäure oder einem Oxadicarbonsäureester der allgemeinen Formel

$$ROOC-CH_2-O-[(CH_2)_2-O]_n-CH_2-COOR,$$

worin R für Wasserstoff oder einen Alkylrest mit 1 bis 6 Kohlenstoffatomen und n für 0 oder eine ganze Zahl von 1 bis 10 stehen,

mit der Massgabe, dass die Komponenten (a), (b) und (c) in einem Molverhältnis von (b) : (a) : (c) = 1 : (0,6 bis 1) : (0,1 bis 0,6) eingesetzt werden, in wasserlöslichen organischen Lösungsmitteln und/oder Wasser bei 80 bis 200°C erhalten worden sind.

Gegenstand der vorliegenden Erfindung sind ausserdem Lösungen der erfindungsgemässen Polykondensationsprodukte in polaren organischen Lösungsmitteln, wie N-Methylpyrrolidon, Dimethylformamid bzw. Dimethylacetamid, durch Zusatz von Ammoniak oder organischen Aminen in wasserverdünnbare Form überführte wässrige Zubereitungen dieser Polykondensationsprodukte sowie die Verwendung der hitzehärtbaren Kondensationsprodukte als Drahtlacke, für Imprägnierungen und Verklebungen.

Die erfindungsgemässen Polykondensationsprodukte lassen sich sehr vorteilhaft verarbeiten. Die damit erhaltenen Lackierungen, Imprägnierungen und Verklebungen zeichnen sich durch hohe Erweichungspunkte (bis zu 450°C) und hohe Elastizität aus.

Zu den Aufbaukomponenten der erfindungsgemässen hitzehärtbaren Polykondensationsprodukte ist im einzelnen folgendes auszuführen:

(a) als Komponente (a) kommen 1,2,3,4-Butantetracarbonsäure, 1,2,3,4-Butantetracarbonsäuremonoanhydrid und 1,2,3,4-Butantetracarbonsäuredianhydrid, vorzugsweise Butantetracarbonsäure in Frage.

(b) Als Komponente (b) eignen sich primäre, aliphatische, cycloaliphatische und aromatische Diamine. Als aliphatische Diamine kommen beispielsweise geradkettige oder verzweigte aliphatische Diamine mit 2 bis 12 Kohlenstoffatomen im aliphatischen Rest, z.B. Äthylendiamin, Hexamethylendiamin, Octamethylendiamin oder 1,2-Propylendiamine, als cycloaliphatische Diamine solche mit 6 bis 12 Kohlenstoffatomen, wie z.B. 1,4-Diaminocyclohexan, als aromatische Diamine kommen beispielsweise ein- und mehrkernige aromatische, ggf. alkylsubstituierte Reste enthaltende Diamine in Frage, wie p-Phenylendiamin, m-Phenylendiamin, p-Xylylendiamin, Benzidin, sowie Diamine der allgemeinen Formel

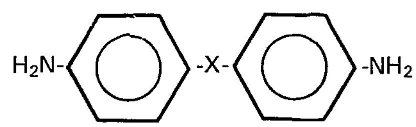

worin X für einen $-CH_2-$, $-C(CH_3)_2-$, -O- -S-, -S(O)-, $-S(O_2)-$ oder -C(O)-Rest steht, wie z.B. 4,4'-Diaminodiphenylmethan, 4,4'-Diaminodiphenylether, 4,4'-Diaminodiphenylsulfid, 4,4'-Diaminodiphenylsulfon, 4,4'-Diaminodiphenylketon und Gemische dieser Amine.

Als Komponente (b) bevorzugt sind 4,4'-Diaminodiphenylmethan und 4,4'-Diaminodiphenylether.

(c) Als Komponente (c) eignen sich erfindungsgemäss Oxadicarbonsäuren oder Oxadicarbonsäureester der allgemeinen Formel

$$ROOC-CH_2-O-[(CH_2)_2-O]_n-CH_2-COOR,$$

worin R für Wasserstoff oder einen Alkylrest mit 1 bis

6 Kohlenstoffatomen und n für 0 oder eine ganze Zahl von 1 bis 10, vorzugsweise von 0 oder 1 bis 4 stehen kann, sowie Gemische dieser Oxadicarbonsäuren bzw. deren Ester.

Beispiele für derartige Oxadicarbonsäure sind 3,6--Dioxa-octan-disäure (= Triglykolsäure), 3-Oxa--pentandisäure (= Diglykolsäure), vorzugsweise Triglykolsäure (n = 1) bzw. für Oxadicarbonsäureester Triglykolsäuredimethylester, -diethylester und Diglykolsäuredimethyl- bzw. -diethylester.

Die Komponenten (a), (b) und (c) werden in einem Molverhältnis von (b) : (a) : (c) = 1 : (0,6 bis 1) : (0,1 bis 0,6), vorzugsweise 1 : (0,8 bis 1) : (0,2 bis 0,4) eingesetzt.

Die erfindungsgemässen hitzehärtbaren Polykondensationsprodukte werden durch Umsetzung der Komponenten (a), (b) und (c) in Wasser und/oder wasserlöslichen organischen Lösungsmitteln bei Temperaturen von 80 bis 200, vorzugsweise 90 bis 150°C erhalten.

Als wasserlösliche organische Lösungsmittel kommen hochsiedende Lösungsmittel in Frage, wie mehrwertige (Oxa)-alkohole und deren Teilether, z.B. Äthylenglykol, Glycerin, Ethylenglykolmonomethylether, Ethylenglykolmonoethylether, Diethylenglykolmonomethylether, Diethylenglykolmonoethylether, Triethylenglykolmonomethylether, Triethylenglykolmonoethylether, stickstoffhaltige Verbindungen, wie N,N-Dimethylformaid, N,N-Dimethylacetamid, N-Methyl-2-pyrrolidon, N,N-Dimethylmethoxyacetamid und Gemische dieser Lösungsmittel.

Diese wasserlöslichen Lösungsmittel bzw. Wasser können bei der Herstellung der hitzehärtbaren Polykondensationsprodukte in Mengen von 50 bis 200, vorzugsweise 80 bis 120 Gew.-%, bezogen auf die Gesamtmenge der Komponenten (a), (b) und (c), anwesend sein.

Die bei der Herstellung der erfindungsgemässen Polykondensationsprodukte anwesenden organischen Lösungsmittel bzw. Wasser können anschliessend, z.B. durch Destillation vollständig oder teilweise entfernt werden oder in der bei der Herstellung unmittelbar anfallenden Form zur Anwendung kommen.

Für die Anwendung geeignete Zubereitungen der erfindungsgemässen hitzehärtbaren Polykondensationsprodukte kommen deren Lösungen in polaren organischen Lösungsmitteln, wie N,N-Dimethylformamid, N,N-Dimethylacetamid, N-Methyl-2-pyrrolidon, N,N-Dimethylmethoxyacetamid und Gemische dieser Lösungsmittel in Frage. Es können so z.B. 35 bis 50%ige Lösungen des hitzehärtbaren Polykondensationsproduktes in diesen Lösungsmitteln hergestellt werden. Eine weitere vorteilhaft zu verarbeitende Zubereitung der erfindungsgemässen hitzehärtbaren Kondensationsprodukte stellen ihre wässrigen Lösungen bzw. wasserverdünnbaren Dispersionen dar, die durch Behandeln der erfindungsgemässen Harze bei Temperaturen von 50 bis 110°C mit wässrigem Ammoniak — was bevorzugt ist — oder organischen Aminen, insbesondere wasserlöslichen, organischen tertiären Aminen, wie z.B. Triäthylamin, Triäthanolamin, 2-Diäthylaminoäthanol, Methyldiisopropylamin, 3-Dimethylaminopropanol u.a. erhältlich sind. Für die Anwendung geeignete wässrige Lösungen enthalten das erfindungsgemässe hitzehärtbare Polykondensationsprodukt im allgemeinen in Konzentrationen von 20 bis 70 Gew.-%.

Den Lösungen der erfindungsgemässen hitzehärtbaren Polykondensationsprodukte können übliche Hilfs- und Zusatzstoffe, wie Härtungskatalysatoren, z.B. übliche Titanat-Katalysatoren in Mengen von etwa 0,1 bis 5 Gew.-%, bezogen auf Polykondensationsprodukt (fest), zugefügt werden.

Eine bevorzugte Anwendung der erfindungsgemässen hitzehärtbaren Amid- und Imidgruppen enthaltenden Polykondensationsprodukte besteht in der Drahtlackierung, die unter Verwendung hierfür üblicher Auftragsvorrichtungen und Einbrennöfen durchgeführt wird. Die Ofentemperaturen betragen im allgemeinen 300 bis 600°C. Die Abzugsgeschwindigkeiten können zwischen 4 bis 36 m/min betragen.

Die erfindungsgemäss erhaltenen Drahtlackierungen können über eine grosse Fahrspanne hergestellt werden und weisen eine hervorragende Elastizität und einen hohen Erweichungspunkt (400 bis 450°C) auf. So treten z.B. weder nach 20% Vordehnung und Wickeln um den Eigendurchmesser des lackierten Drahtes noch nach Lagern derartiger Wickellocken während 1 Stunde bei 300°C Risse in der Lackierung auf.

Weitere Anwendungen der erfindungsgemässen Polykondensationsprodukte sind Imprägnierungen von z.B. Glasmatten sowie Verklebungen von hitzebeständigen Materialien, wie Folien, Vliesen oder Papieren. Auch für diese Anwendungen zeigen die erfindungsgemässen Polykondensationsprodukte nach dem Härten die oben erwähnten vorteilhaften Eigenschaften.

Die in den Beispielen angegebenen Teile und Prozente sind, soweit nicht anders angegeben, Gew.-Teile bzw. Gew.-%.

*Beispiel 1*

78 Teile 1,2,3,4-Butantetracarbonsäure und 12,3 Teile Triglykolsäure werden in 8,3 Teilen Ethylenglykol und 100 Teilen Wasser unter Erwärmen auf 50°C gelöst. Danach werden 66 Teile Diaminodiphenylmethan und 16,7 Teile Wasser zugegeben und die Temperatur langsam auf 130°C erhöht. Nach etwa 2 Stunden Reaktionszeit sind 132 Teile Ethylenglykol und Wasser abdestilliert. Es entsteht ein homogenes Harz mit einer Viskosität von 38 $mm^2s^{-1}$. 47 Teile des Harzes werden in 60 Teilen N-Methylpyrrolidon gelöst. Man erhält eine 40%ige Lösung, mit der 0,5-mm-Kupferdraht in einer Drahtlakiermaschine mit einer Ofenlänge von 2,5 m bei 460°C beschichtet wird. Die Lackdrahteigenschaften (i.O. = in Ordnung) sind:

| | | | |
|---|---|---|---|
| Lackiergeschwindigkeit m/min) | 20 | 22 | 24 |
| Zunahme ($\mu$m) | 30 | 38 | 37 |
| Snap-test | i.O. | i.O. | i.O. |
| Durchschlagspannung (V/$\mu$m) | 279 | 259 | 258 |
| Erweichungspunkt (°C) | 450 | 450 | 440 |
| Wickellocke 1 × D nach 20% Vordehnung | i.O. | i.O. | i.O. |
| 1 Stunde bei 300°C Wickellocke 1 × D nach 20% Vordehnung | i.O. | i.O. | i.O. |

*Beispiel 2*

187 Teile Butantetracarbonsäure, 27 Teile Diglykolsäure, 25 Teile Ethylenglykol, 198 Teile Diaminodiphenylmethan und 350 Teile Wasser werden in ein Reaktionsgefäss gegeben. Anschliessend erwärmt man auf 140°C. Nach etwa 4 Stunden sind 357 Teile Destillat bei 110°C übergegangen. Man erhält ein klares, homogenes Harz mit einer Viskosität von 44 $mm^2s^{-1}$.

a) Mit einem Teil des Harzes wird eine 50%ige Lösung in N,N-Dimethylformamid hergestellt und 0,5-mm-Kupferdraht lackiert (Ofenlänge 2,5 m; Ofentemperatur 460°C).

| | | | |
|---|---|---|---|
| Lackiergeschwindigkeit (m/min) | 20 | 22 | 24 |
| Zunahme ($\mu$m) | 38 | 28 | 28 |
| Snap-test | i.O. | i.O. | i.O. |
| Durchschlagspannung (V/$\mu$m) | 199 | 268 | 318 |
| Erweichungspunkt (°C) | 400 | 400 | 395 |
| Wickellocke 1 × D nach 20% Vordehnung | i.O. | i.O. | i.O. |
| 1 Stunde bei 300°C Wickellocke 1 × D nach 15% Vordehnung | i.O. | i.O. | i.O. |

b) Mit einem zweiten Teil des nach Beispiel 2 hergestellten Harzes wird ein Wasserlack hergestellt. Dazu werden zu 200 Teilen des Harzes bei 90°C 175 Teile 25%ige wässrige $NH_3$-Lösung zugetropft und weitere 2 Stunden bei dieser Temperatur gerührt. Man erhält einen klaren Lack mit 994 mPas bei einem Feststoffgehalt von 53%. Die Lackdrahteigenschaften sind mit den obengenannten Ergebnissen identisch.

*Vergleichsbeispiel*

351 Teile 1,2,3,4-Butantetracarbonsäure, 93 Teile Ethylenglykol und 500 Teile Wasser werden in ein Reaktionsgefäss gegeben und auf 50°C erwärmt. Nach dem Lösen der Komponenten gibt man 297 Teile Diaminodiphenylmethan und 100 Teile Wasser zu. Anschliessend wird auf 140°C erwärmt. Nach ca. 4 Stunden sind 605 Teile Destillat übergegangen. Man erhält ein klares, sprödes Harz mit einer Viskosität von 95 $mm^2sec^{-1}$. Mit einem Lack, hergestellt aus 80 Teilen Harz und 100 Teilen N-Methylpyrrolidon wird 0,8-mm-Kupferdraht lackiert. Die Lackierergebnisse sind wie folgt:

| | | |
|---|---|---|
| Ofentemperatur (°C) | 460 | 460 |
| Abzugsgeschwindigkeit (m/min) | 5 | 4 |
| Durchmesserzunahme ($\mu$m) | 37 | 39 |
| Snap-test | i.O. | i.O. |
| Durchschlagspannung (V/$\mu$m) | 134 | 91 |
| Erweichungspunkt (°C) | 340 | 365 |
| Wickellocke 1 × D nach 10% Vordehnung | noch i.O. | 1 × D i.O. |
| 1 Stunde bei 300°C Wickellocke 1 × D nach 10% Vordehnung | noch i.O. | 1 × D i.O. |

## Patentansprüche

1. Hitzehärtbare, Amid- und Imidgruppen enthaltende Polykondensationsprodukte, dadurch gekennzeichnet, dass sie durch Umsetzung von

a) 1,2,3,4-Butantetracarbonsäure oder Butantetracarbonsäureanhydrid mit

b) mindestens einem aliphatischen, cycloaliphatischen oder aromatischen Diamin und

c) mindestens einer Oxadicarbonsäure oder einem Oxadicarbonsäureester der allgemeinen Formel

$$ROOC\text{-}CH_2\text{-}O\text{-}[(CH_2)_2\text{-}O]_n\ CH_2\text{-}COOR,$$

worin R für Wasserstoff oder einen Alkylrest mit 1 bis 6 Kohlenstoffatomen und n für 0 oder eine ganze Zahl von 1 bis 10 stehen,

mit der Massgabe, dass die Komponenten (a), (b) und (c) in einem Molverhältnis von (b) : (a) : (c) = 1 : (0,6 bis 1) : (0,1 bis 0,6) eingesetzt werden, in wasserlöslichen organischen Lösungsmitteln und/oder Wasser bei 80 bis 200°C erhalten worden sind.

2. Polykondensationsprodukte nach Anspruch 1, dadurch gekennzeichnet, dass sie in einem polaren organischen Lösungsmittel aus der Gruppe N,N-Dimethylformamid, N,N-Dimethylacetamid und N-Methyl-2-pyrrolidon gelöst sind.

3. Polykondensationsprodukte nach Anspruch 1, dadurch gekennzeichnet, dass sie nach Zugabe wässriger Ammoniak- oder Aminlösung in Wasser gelöst sind.

4. Verwendung der Polykondensationsprodukte nach einem der vorhergehenden Ansprüche als Drahtlack, für Imprägnierungen oder Verklebungen.

## Claims

1. A thermosetting polycondensate, containing amide groups and imide groups, which is obtained by reacting

a) 1,2,3,4-butanetetracarboxylic acid or its anhydride with

b) one or more aliphatic, cycloaliphatic or aromatic diamines, and

c) one or more oxadicarboxylic acids or oxadicarboxylic acid esters of the general formula

$$ROOC\text{-}CH_2\text{-}O\text{-}[(CH_2)_2\text{-}O]_n\ CH_2\text{-}COOR$$

where R is hydrogen or an alkyl of 1 to 6 carbon atoms and n is 0 or an integer from 1 to 10,

in a water-soluble organic solvent and/or water at from 80 to 200°C, the components (a), (b) and (c) being employed in a molar ratio of (b) to (a) to (c) of 1 : (0.6-1) : (0.1-0.6).

2. A polycondensate as claimed in claim 1, which is dissolved in a polar organic solvent from the group comprising N,N'-dimethylformamide, N,N'--dimethylacetamide and N-methyl-2-pyrrolidone.

3. A polycondensate as claimed in claim 1, which is dissolved in water after addition of an aqueous ammonia or amine solution.

4. The use of a polycondensate as claimed in any of the preceding claims as a wire enamel, impregnating agent or adhesive.

## Revendications

1. Produits de polycondensation thermodurcissables, contenant des groupes amide et imide, caractérisés par le fait qu'ils ont été obtenus par réaction, entre 80 et 200 °C, dans des solvants organiques solubles dans l'eau et/ou de l'eau, d'

a) acide 1,2,3,4-butanetétracarboxylique ou anhydre butanetétracarboxylique, avec

b) au moins une diamine aliphatique, cycloaliphatique ou aromatique et

c) au moins acide oxadicarboxylique ou un ester d'acide oxadicarboxylique de la formule générale

$$ROOC\text{-}CH_2\text{-}O\left[(CH_2)_2\text{-}O\right]_n CH_2\text{-}COOR,$$

dans laquelle R représente hydrogène ou un reste alkyle ayant 1 à 6 atomes de carbone et n représente 0 ou un nombre entier de 1 à 10,
sous réserve que les composants (a), (b) et (c) soient introduits en rapports molaires de (b)/(a)/(c) = 1/(0,6 à 1)/(0,1 à 0,6).

2. Produits de polycondensation selon la revendication 1, caractérisés par le fait qu'ils sont dissous dans un solvant organique du groupe constitué de N,N-diméthylformamide, N,N-diméthylacétamide, et N-méthyl-2-pyrrolidone.

3. Produits de polycondensation selon la revendication 1, caractérisés par le fait qu'ils sont dissous dans de l'eau, après addition de solution aqueuse d'ammoniac ou d'amine.

4. Utilisation des produits de polycondensation selon l'une des revendications précédentes comme laque d'émaillage, pour des imprégnations ou des collages.